Europäisches Patentamt

European Patent Office

Office européen des brevets

(11) Publication number: **0 227 385**
**A2**

# (12) EUROPEAN PATENT APPLICATION

(21) Application number: **86309648.3**

(22) Date of filing: **11.12.86**

(51) Int. Cl.⁴: **C 08 F 265/02**
**C 08 F 265/04, C 08 F 259/06**
**C 08 J 7/04**

(30) Priority: **23.12.85 US 812084**

(43) Date of publication of application:
**01.07.87 Bulletin 87/27**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Chu, Shaw Chang**
**107 Monroe Avenue**
**Belle Mead, N.J. 08502(US)**

(74) Representative: **Grundy, Derek George Ritchie et al,**
**CARPMAELS & RANSFORD 43, Bloomsbury Square**
**London WC1A 2RA(GB)**

(54) Core-shell polymer emulsion with PVDC and acrylic resins as heat-sealable barrier film coatings.

(57) Core-shell two component polymer emulsions in which one component in either the core or the shell is a polyvinylidene chloride polymer and the second component is an acrylic resin containing less than 50 weight percent vinylidene chloride are prepared by polymerizing the monomers of one component in the presence of an emulsion of the other component to give a core-shell product useful for the production of heat-sealable barrier coatings for polymers such as oriented polypropylene.

EP 0 227 385 A2

Croydon Printing Company Ltd.

## CORE-SHELL POLYMER EMULSION WITH POLYVINYLIDENE CHLORIDE AND ACRYLIC RESINS AS HEAT-SEALABLE BARRIER FILM COATINGS

Emulsions containing copolymers of a major proportion of vinylidene chloride with acrylic or methacrylic acid and lower alkyl acrylate esters are well known as heat-sealable barrier coatings for films, in particular, oriented polypropylene. Such emulsions are disclosed in U.S. Patent 4,058,649. It is difficult, however, to obtain a good balance of heat-sealability and barrier properties with a single copolymer.

In order to overcome some of the disadvantages of known emulsions containing copolymers containing vinylidene chloride, various core-shell emulsions were developed. Such core-shell emulsion polymers containing vinylidene chloride in either the core, the shell or both are described in U.S. Patents 3,379,665 and 4,156,669.

The method of making core-shell emulsions disclosed in U.S. Patents 3,379,665 and 4,156,669, and many other patents, generally involves the polymerization of the shell monomers in an emulsion of the preformed core polymer.

In accordance with this invention, the method of preparation of the emulsions is similar to the methods described in the referenced patents but the core and shell components and proportions are selected to give the desired balance of heat-sealability and barrier properties for their intended use as coatings for oriented polypropylene.

The present invention provides a composition comprising a core-shell polymer emulsion in which the core comprises (a) a polymer containing at least 80 weight percent of vinylidene chloride or (b) a polymer containing 50 to 100 weight percent of an acrylic monomer and 0 to 50 weight percent of vinylidene chloride, either (a) or (b) polymer can serve as the shell or the core providing that when the core comprises (a) polymer, the shell comprises (b) polymer and when the core comprises (b) polymer, the shell comprises (a) polymer.

In order to obtain a good balance of the desired heat seala- bility and barrier properties as well as other properties such as adhesion and flexibility suitable for polypropylene coatings, it is desirable that the core-shell emulsion contain vinylidene chloride in a total amount of about 60 to 85 weight percent, preferably 70 to 80 weight percent. Thus, the vinylidene chloride can be present in both the core and the shell polymers but it is necessarily present in only one of those polymers.

The proper balancing of the weight ratio of the core and the shell polymers can be used to obtain the desired overall vinylidene chloride content. In general, the weight ratio of the core to the shell is such that the weight ratio of (a) polymer (which is predominantly vinylidene chloride) to the (b) polymer is 9:1 to 2:1, preferably 5:1 to 3:1.

Suitable compositions have been prepared in which the polyvinylidene-rich (a) copolymer formed the shell and was present in a weight ratio of about 4:1 to the (b) polymer which was entirely acrylic monomers.

The acrylic monomers which are suitable for use in this invention include acrylic acid, methacrylic acid, their esters, amides, and nitriles, particularly the acids and their lower alkyl esters. Particularly preferred are acrylic acid, methacrylic acid and their methyl and ethyl esters. The acrylic monomers can comprise the major proportion of the (b) polymer component and the comonomers used with vinylidene chloride in the (a) polymer component.

The methods of preparation of core-shell polymers are conventional. The catalyst system is not critical. Typical free radical generating catalysts including inorganic peroxygen compounds such as hydrogen peroxide and the alkali persulfates, organic peroxygen compounds such as benzoyl peroxide, diacetyl peroxide and the like, azo compounds such as alpha, beta-azobisisobutyronitrile, and redox systems such as ammonium persulfate-sodium bisulfite can be used. Many types of surfacant may be employed including the common anionic or nonionic types and combinations thereof. The alkyl benzene sodium sulfonates are especially useful. Reaction temperature and pH are not critical, nor is the ratio of water to monomers. The final product generally contains more than 25% solids (polymer) and preferably above 40% solids.

The compositions of this invention are particularly suitable as coatings for polymer films, especially oriented polypropylene. The coatings can be applied in the conventional manner to a polypropylene film which has been biaxially oriented. Also it has been found that the coatings can be applied to polypropylene after its orientation in one direction and that the characteristics of the coating permit the subsequent orientation of the film in the other direction. This can give a processing advantage over the conventional method of coating the biaxially oriented film by the elimination of a roll-up step.

The invention is illustrated by the following non-limiting examples.

<u>EXAMPLE 1</u>

A.    <u>Preparation of Core Composition</u>

A 2-liter reactor equipped with stirrer, reflux condenser, thermometer, heating mantle and nitrogen inlet was charged with 720 parts de-ionized water and 20 parts 10% Sipex SB (sodium lauryl sulfate). The aqueous solution was heated to 80°C under nitrogen and held at this temperature for 30 minutes. A solution of 2 parts ammonium persulfate in 20 parts water was added. In the meantime, a premix of 200 parts methyl acrylate and 200 parts methyl methacrylate was added over 3 hours at 80°C, after which this temperature was held for 30 minutes. The resulting emulsion has a solids content of 31.24% and particle size of 0.08 micron.

B.          Preparation of Core/Shell Composition

In a 2-liter reactor was charged 270 parts de-ionized water and 335.5 parts of the core emulsion prepared above, and the mixture was heated to 45°C under nitrogen and sparged with nitrogen for 30 minutes. A solution of 1.62 parts ammonium persulfate in 30.8 parts water was added, and a second solution of 6.65 parts 0.1% ammonium iron (II) sulfate hexahydrate and 6.65 parts 1% sodium bisulfite was also added. In the meantime, a premix of 372 parts vinylidene chloride, 24 parts methyl acrylate, and 4 parts methacrylic acid was added over 5 hours along with a separate solution of 10.65 parts 1% sodium bisulfate in 50 parts de-ionized water. After these delayed additions, the reaction was held for 30 minutes, and then sparged with nitrogen for 1 hour to remove any residual vinylidene chloride monomer that might be left. The resulting core/shell polymer emulsion has a solids content of 44.54% and particle size of 0.09 micron.

### EXAMPLE 2

A.          Preparation of Core Composition

In a manner similar to Example 1A, a premix composition of 120 parts ethyl acrylate and 280 parts methyl methacrylate was polymerized. The emulsion thus formed has a solids content of 31.05% and particle size of 0.09 micron.

B.          Preparation of Core/Shell Composition

In a manner similar to Example 1B, a shell composition containing 360 parts vinylidene chloride, 32 parts methyl methacrylate and 8 parts methacrylic acid was polymerized in the presence of 335.5 parts of the core emulsion prepared in A above. The resulting emulsion has a solids content of 43.30% and particle size of 0.10 micron.

## EXAMPLE 3

The emulsion product of Example 1B (100 parts) was mixed with 50 parts de-ionized water and 0.80 parts Zonyl FSN (fluorosurfactant) until uniform.  The resulting finish, which is ready for coating plastic film such as oriented polypropylene, has a solids content of 28.2%.

A polypropylene plaque of 6.03 cm x 6.03 cm x 0.05 cm (thickness) (2.375" x 2.375" x 0.02" (thickness)), which has been surface-treated by corona discharge, was stretched in X-direction in a T.M. Long film stretcher at 160°C (320°F) using a 7.2X stretching head.  The above coating was then brush-coated onto the uniaxially stretched film and then dried in the film stretcher for 2 minutes. The coated film was stretched again in Y-direction at 160°C (320°F), and a clear, uniformly stretched film of 27.9 cm x 27.9 cm x 0.0013 cm (thickness) (11" x 11" x 0.0005 (thickness)) was obtained.

CLAIMS:

1. A composition comprising a core-shell polymer emulsion in which the core comprises (a) a polymer containing at least 80 weight percent of vinylidene chloride, or (b) a polymer comprising 50 to 100 weight percent of acrylic monomer and 0 to 50 weight percent of vinylidene chloride; and the shell comprises the (a) polymer where the core is the (b) polymer, and the shell comprises the (b) polymer where the core is the (a) polymer.

2. The composition of claim 1 in which the core comprises the (b) polymer and the shell comprises the (a) polymer.

3. The composition of claim 1 or 2 in which the weight ratio of the (a) polymer: (b) polymer is from 9:1 to 2:1.

4. The composition of claim 1 or 2 in which the (b) polymer consists essentially of polymerized acrylic acid, methacrylic acid, the lower alkyl esters of acrylic acid, or the lower alkyl esters of methacrylic acid and substantially no vinylidene chloride.

5. The composition of claim 3 in which the (b) polymer consists essentially of polymerized acrylic acid, methacrylic acid, the lower alkyl esters of acrylic acid, or the lower alkyl esters of methacrylic acid and substantially no vinylidene chloride.

6. The composition of claim 4 in which the (b) polymer consists essentially of acrylic acid, methacrylic acid, methyl acrylate, ethyl acrylate, methyl methacrylate or ethyl methacrylate.

7. The composition of claim 5 in which the (b) polymer consists essentially of acrylic acid, methacrylic acid, methyl acrylate, ethyl acrylate, methyl methacrylate or ethyl methacrylate.

8.    Polypropylene coated with the composition of claim 1.

9.    Polypropylene coated with the composition of claim 4.

0243h/0008h